(19) **Europäisches Patentamt**
**European Patent Office**
**Office européen des brevets**

(11) **EP 2 138 399 B1**

(12) **FASCICULE DE BREVET EUROPEEN**

(45) Date de publication et mention
de la délivrance du brevet:
**25.08.2010 Bulletin 2010/34**

(51) Int Cl.:
***B64C 27/51*** *(2006.01)*  ***B64C 27/00*** *(2006.01)*

(21) Numéro de dépôt: **09007388.3**

(22) Date de dépôt: **04.06.2009**

(54) **Pale pour réduire les mouvements en traînée de ladite pale et procédé pour réduire un tel mouvement en traînée**

Blatt zur Reduzierung der Bewegungen im Strömungswiderstand dieses Blatts und Verfahren zur Reduzierung einer solchen Bewegung im Strömungswiderstand

Blade for reducing the drag movements of said blade and method for reducing such a drag movement

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **27.06.2008 FR 0803618**

(43) Date de publication de la demande:
**30.12.2009 Bulletin 2009/53**

(73) Titulaire: **EUROCOPTER**
**13725 Marignane Cédex (FR)**

(72) Inventeurs:
• **Manfredotti, Thomas**
**06480 La Colle sur Loup (FR)**

• **Cranga, Paul**
**13004 Marseille (FR)**
• **Guitton, Julien**
**13220 Chateauneuf-Les-Martigues (FR)**

(74) Mandataire: **GPI & Associés**
**1330, rue Guillibert de la Lauzière**
**EuroParc de Pichaury, Bât B2**
**13856 Aix en Provence Cedex 3 (FR)**

(56) Documents cités:
**EP-A- 0 792 414    EP-A- 1 101 034**
**EP-A- 1 754 886    DE-A1-102006 030 167**

**Description**

La présente invention concerne une pale munie d'un résonateur intégré pour réduire ses mouvements en traînée ainsi que le procédé mis en oeuvre par une telle pale, plus particulièrement une pale d'un rotor principal de sustentation et de propulsion d'un giravion, notamment d'un hélicoptère.

Le domaine technique de l'invention est celui des moyens d'amortissement de mouvements en traînée d'une pale.

De façon générale, les rotors de giravions comportent un moyeu entraîné en rotation selon un axe de rotation par un arbre de sortie d'une boite de transmission de puissance, dénommé arbre d'entraînement, ainsi qu'au moins deux pales fixées au moyeu par l'intermédiaire d'articulations appropriées, en particulier par l'intermédiaire d'une butée sphérique lamifiée dédiée à chaque pale, et des amortisseurs interpales reliant chacune deux pales adjacentes ou des amortisseurs reliant chaque pale au moyeu.

En effet, il est rappelé que dans l'hypothèse de l'encastrement de chaque pale sur un moyeu, le rotor ainsi constitué est un rotor rigide. En vol stationnaire, la répartition des efforts aérodynamiques le long d'une pale engendre une répartition des moments de flexion en battement et en traînée dont les valeurs sont très importantes au pied de la pale en raison de l'augmentation de la vitesse circonférentielle proportionnellement au rayon du rotor.

Par ailleurs, en vol de translation, la pale dite « avançante » porte plus que la pale dite « reculante » du fait de l'inégalité des vitesses de l'air comme cela sera précisé par ailleurs.

Par conséquent, la résultante des forces aérodynamiques exercées sur une pale n'a donc pas la même valeur en chaque azimut, ni le même point d'application : le moment d'encastrement au pied de la pale est ainsi élevé et variable, ce qui génère des contraintes alternées entraînant un phénomène de fatigue préjudiciable des matériaux. De plus, la résultante des forces aérodynamiques de toutes les pales n'est plus portée par l'axe rotor ce qui entraîne la création d'un moment de roulis, croissant avec la vitesse qui peut rendre difficile l'équilibre des forces en vol de translation.

Afin de remédier à ces inconvénients, il est connu d'articuler les pales sur le moyeu autour d'un axe perpendiculaire à l'arbre d'entraînement et désigné axe de battement vertical auquel correspond une articulation de battement vertical capable de reprendre une force d'orientation quelconque mais ne peut, en aucun cas, reprendre un moment. Par conséquent, si une pale est articulée en battement sur le moyeu, le moment de flexion de battement sera nul à l'attache. Pour satisfaire l'équilibre d'une pale, les efforts centrifuges maintiennent la pale après une certaine levée de celle-ci, laissant apparaître une conicité $a_0$.

Dans ces conditions, il n'y a plus de moment de roulis important en translation d'une part et les pales ne tournent plus dans un plan, mais leurs extrémités extérieures décrivent un cône très ouvert. En pratique, l'axe de battement ne se trouve plus, alors, sur l'axe de rotation mais est décalé d'une distance $a$, appelée excentricité.

Il convient encore de rappeler qu'il faut, pour assurer la sustentation d'un hélicoptère lors de ses différentes configurations, pouvoir contrôler la sustentation du rotor et la faire varier. C'est ainsi qu'est introduite l'articulation de pas, dont l'axe est sensiblement parallèle à l'envergure de la pale correspondante. Ce nouveau degré de liberté permet de contrôler la portance de la pale par action sur la commande de pas général et aussi de faire varier le pas cycliquement, permettant ainsi le contrôle du plan de rotation des pales qui décrivent alors un cône dont l'axe virtuel ne coïncide plus avec l'axe d'entraînement : la résultante des forces appliquées au moyeu change de direction en même temps que le plan du rotor. De ce fait, il en résulte des moments autour du centre de gravité de l'hélicoptère, ce qui permet son pilotage.

Comme indiqué précédemment, le plan de rotation des pales peut être différent du plan perpendiculaire à l'arbre d'entraînement. Dans ces conditions, il est nécessaire d'articuler chaque pale en traînée car l'extrémité de chaque pale est à une distance variable de l'arbre rotor. Sinon, il apparaîtrait nécessairement des forces d'inertie, génératrices de moments de flexion alternée de chaque pale dans son plan. Une telle articulation de traînée se fait en articulant une pale autour d'un axe de traînée sensiblement parallèle à l'axe rotor, et par suite sensiblement perpendiculaire aux efforts de traînée. Pour qu'une telle pale puisse être entraînée à partir de l'arbre d'entraînement, il faut bien sûr que l'articulation de traînée soit suffisamment éloignée de l'axe rotor pour que le moment dû aux forces centrifuges équilibre le moment dû aux forces de traînée et d'inertie, ce qui exige un déport de l'axe de traînée ou excentrement $e$, et ceci sans que l'angle $\delta$ dit de « traînée », soit trop important.

Par conséquent, les pales d'un rotor articulé d'aéronef à voilure tournante, notamment un hélicoptère, peuvent être animées des quatre mouvements suivants :

I) une rotation autour de l'axe rotor,

II) une rotation autour de l'axe de battement vertical, grâce à l'articulation de battement vertical,

III) une rotation autour de l'axe de traînée, encore dit axe de battement horizontal, grâce à l'articulation de battement horizontal, ou articulation de traînée.

IV) une rotation autour de l'axe de pas de la pale grâce à une articulation de pas (non spécifique des rotors articulés).

Comme prévu par le brevet FR2497073, par exemple, les trois rotations II-III et IV décrites ci-dessus peuvent être réalisées par un seul organe tel qu'une butée sphérique lamifiée.

Toutefois, les oscillations de chaque pale autour de son axe de traînée peuvent se coupler de façon instable avec les mouvements ou les modes de déformations élastiques de la cellule, en particulier les oscillations de l'hélicoptère posé au sol sur ses atterrisseurs : c'est l'origine du phénomène, désigné « résonance au sol », qui peut être dangereux pour l'appareil lorsque la fréquence propre, exprimée dans les axes fixes de l'appareil, des oscillations des pales autour de leurs axes de traînée est voisine de l'une des fréquences propres des oscillations de l'appareil.

On connaît par le document FR 791701 un résonateur à inertie porté par une pale de rotor pour amortir ou contribuer à amortir les vibrations ou les oscillations de cette pale.

Ce résonateur à inertie comprend un ou plusieurs éléments pesants susceptibles d'effectuer un mouvement transversal par rapport à l'axe longitudinal de la pale.

Par suite, une « caisse » est fixée à la membrure d'une pale. La membrure de la pale étant disposée selon l'axe longitudinal de la pale, la caisse est agencée transversalement à cette membrure.

Au moins un élément pesant est alors disposé dans la caisse, cette dernière lui servant de moyen de guidage lors de son déplacement transversal.

Selon ce document FR 791701, il convient donc de déplacer transversalement un élément pesant pour résoudre le problème posé.

En effet, le document FR 791701 explique que si la pale effectue un mouvement de traînée, le poids se déplace dans le sens opposé au sens de déplacement de la pale ce qui contribue à amortir le mouvement de cette pale, le mouvement de l'élément pesant étant retardé par rapport à celui de la pale du fait de son inertie.

De même, bien que le domaine des pales d'éoliennes soit éloigné de l'invention dans la mesure où il n'y pas d'apparitions du phénomène de résonance sol en tant que tel, les documents DE10202995 et EP0792414 envisagent des résonateurs à inertie utilisant le déplacement transversal d'un élément pesant selon une direction perpendiculaire à une direction longitudinale de la pale, ladite direction longitudinale passant par le pied de la pale et son extrémité et étant sensiblement parallèle à l'axe de variation de pas de la pale voire confondue à cet axe de variation de pas.

Enfin dans le même registre, le document EP1101034 prévoit une pale d'éolienne munie d'une cavité en forme de O à l'intérieur de laquelle se déplace un liquide dans la direction des oscillations, et donc transversalement à la pale.

Bien qu'efficace, ces différents résonateurs prévoyant un déplacement transversal d'un élément pesant apportent un amortissement limité, et ne donnent donc pas totalement satisfaction.

Par conséquent, les constructeurs de giravions utilisent généralement une autre solution. En effet, ces constructeurs remédient au phénomène soulevé de « résonance au sol » en introduisant sur les axes de traînée un amortissement par un résonateur du type amortisseur visqueux ou sec, notamment, ou encore une rigidité à l'aide de câbles de tierçage associés ou non à des amortisseurs comme sur l'hélicoptère ALOUETTE de la demanderesse.

Une fonction analogue à celle des câbles de tierçage est assurée par des liaisons élastiques interpales. En pratique, il s'agit de disposer un amortisseur entre deux pales adjacentes, les fixations d'un tel amortisseur à chacune de deux pales adjacentes étant à égale distance du centre rotor, c'est-à-dire à un rayon identique par rapport à ce centre rotor.

Ces amortisseurs de traînée interpales comprennent des moyens de rappel élastique à raideur et amortissement déterminés, pour combattre les phénomènes de résonance, en particulier de résonance sol et aussi de résonance de chaîne cinématique qui peuvent apparaître notamment sur les hélicoptères.

Les brevets FR 2 630 703 et US 4 915 585 décrivent un rotor dont chaque pale est fixée au moyeu par un manchon dont les extrémités sont en forme de chape comportant deux branches espacées et en regard mutuel, un amortisseur de traînée interpale étant fixé à deux pales adjacentes par deux rotules respectives.

Bien qu'efficace, l'agencement d'amortisseurs de traînée interpales présente des inconvénients.

En premier lieu, la masse de chaque amortisseur interpale est couramment comprise entre six et onze kilogrammes ce qui n'est pas négligeable.

En second lieu, le moyeu du rotor doit être dimensionné afin d'accueillir les amortisseurs interpales ce qui induit une augmentation de la masse de ce moyeu.

Enfin, il est à noter que les amortisseurs interpales travaillent la plupart du temps de manière partielle sous l'effet des débattements dynamiques des pales et augmentent la traînée du rotor.

La présente invention a alors pour objet de proposer une pale sustentatrice, de préférence de giravion, munie d'un résonateur permettant d'amortir le mouvement de traînée de la pale, pour éviter l'apparition d'un phénomène de « résonance au sol » notamment.

Selon l'invention, une pale, s'étendant longitudinalement d'un pied de la pale à une extrémité libre de cette pale, est munie d'un résonateur intégré, c'est-à-dire intégré dans la pale, pour réduire les mouvements en traînée de ladite pale, lorsque la pale tourne autour d'un axe de rotation tel que le mât d'un rotor de giravion par exemple. Le résonateur est alors pourvu d'un élément pesant, solide et mobile, ainsi que d'un moyen de retenue élastique solidaire dudit élément pesant et de cette pale.

La pale, par exemple une pale de giravion, est remarquable en ce que ledit résonateur comporte un moyen de guidage dans lequel l'élément pesant est apte à osciller longitudinalement, le moyen de guidage étant agencé selon une direction longitudinale.

La direction longitudinale, selon laquelle l'élément pesant est mobile, est sensiblement parallèle à l'axe de variation de pas de la pale, voire est confondue avec cet axe de variation de pas. Par suite, la direction longitudinale est dirigée selon l'envergure de la pale.

Contrairement aux préjugés existants, l'invention vise à agencer un élément pesant solide dans une pale de manière à laisser à cet élément pesant solide une liberté de mouvement selon une direction longitudinale de la pale et non pas selon une direction transversale perpendiculaire à l'axe de variation de pas de la pale.

Le résonateur peut alors de manière surprenante lutter efficacement contre les mouvements de traînée de la pale, lorsque cette pale est entraînée en rotation autour d'un axe de rotation, en générant des forces de Coriolis secondaires.

En effet, la raideur statique du moyen de retenue élastique permet de maintenir l'élément pesant dans une position d'équilibre dans le moyen de guidage, quand la pale est entraînée en rotation par un moyeu d'un rotor solidarisé à son pied. On note que la raideur statique du moyen de retenue élastique est suffisante pour maintenir l'élément pesant dans sa position d'équilibre et l'empêcher d'atteindre une butée sous l'effet de l'inertie.

Cependant, lorsque la pale entame un mouvement de traînée l'élément pesant se déplace radialement par rapport à la trajectoire décrite par la pale sous l'effet de forces de Coriolis primaires, et donc longitudinalement par rapport à cette pale.

Si le mouvement de traînée tend à déplacer la pale selon un premier sens par rapport à une position moyenne, lequel premier sens correspond au sens de rotation du rotor équipé de ladite pale autour d'un axe de rotation, alors l'élément pesant tend à s'éloigner de cet axe de rotation de manière à se rapprocher de l'extrémité libre de la pale. Il en résulte la création de forces de Coriolis secondaires agissant perpendiculairement au sens du mouvement en traînée de la pale et donc selon un deuxième sens opposé au premier sens de rotation du rotor.

Plus précisément, une pale avançante, c'est-à-dire soumise à une augmentation de sa vitesse relative par rapport à l'écoulement d'air incident, se soulève. Dés lors tout élément de la pale se rapproche de l'axe de rotation du rotor et sa vitesse circonférentielle, sur sa trajectoire devrait diminuer. Or, par effet d'inertie, les forces de Coriolis primaires maintiennent constants la vitesse de l'extrémité libre de la pale et le moment cinétique de cette pale, notamment.

Ces forces de Coriolis primaires à l'origine du mouvement de traînée de la pale sont dues à l'accélération de Coriolis résultant de la vitesse relative de montée de la pale associée à la vitesse de rotation angulaire d'entrainement du rotor.

Chaque élément de la pale est donc soumis à une augmentation de vitesse dans le sens de rotation du rotor, ce qui accroit la force centrifuge et déplace l'élément pesant vers l'extérieure.

Ainsi le centre de gravité de la pale se déplace aussi vers l'extérieur ce qui tend à faire abaisser la pale par effet de gravité et simultanément s'oppose à ladite augmentation de vitesse de tout élément de la pale. Le mouvement de traînée est alors de fait réduit dans ce sens de rotation.

Plus précisément, la vitesse relative de descente de la pale associée à la vitesse de rotation angulaire d'entraînement du rotor génère des forces de Coriolis secondaires, antagonistes aux forces de Coriolis primaires, qui s'opposent au mouvement de traînée de la pale.

Par conséquent, en l'absence de l'invention, la pale subit uniquement les forces de Coriolis primaires ce qui entraine un mouvement en traînée de grande amplitude.

A contrario, l'invention permet de générer des forces de Coriolis secondaires opposées auxdites forces de Coriolis primaires, ce qui permet de limiter, voir d'annihiler le mouvement en traînée de la pale.

De même, si le mouvement de traînée tend à déplacer la pale dans le deuxième sens opposé au premier sens, alors l'élément pesant tend à se rapprocher de l'axe de traînée de manière à se rapprocher du pied de la pale. Il en résulte la création de forces de Coriolis secondaires agissant selon le sens de rotation du rotor.

De manière surprenante et innovante, le résonateur ne prévoit pas un déplacement de l'élément pesant dans la direction du mouvement en traînée de la pale, indépendamment de son sens, mais au contraire selon une direction longitudinale sensiblement perpendiculaire à ladite direction du mouvement de la pale en traînée.

En outre, l'invention peut comporter une ou plusieurs des caractéristiques additionnelles qui suivent.

Ainsi, le moyen de retenue élastique a une raideur statique élevée et une raideur dynamique faible.

Cette caractéristique parait être aberrante et contradictoire ce qui implique qu'elle ne peut être obtenue par de simples essais. Néanmoins, elle permet d'optimiser le fonctionnement du résonateur.

En effet, la raideur statique forte du résonateur garantit que l'élément pesant ne va pas être maintenu en butée contre le fond du moyen de guidage le plus proche de l'extrémité libre de la pale.

A contrario, la raideur dynamique faible autorise le déplacement requis de l'élément pesant autour de sa position d'équilibre.

Selon un premier de mode de réalisation, le moyen de retenue élastique est un ressort.

Plus précisément, conformément à une première variante du premier de mode de réalisation, le moyen de retenue élastique est un ressort à allongement linéaire.

Au contraire, selon une deuxième variante du premier mode de réalisation, le moyen de retenue élastique est un ressort de torsion.

Selon un deuxième mode de réalisation, le moyen de retenue élastique comporte un matériau faisant parti du groupe des élastomères.

Par ailleurs, quel que soit le mode de réalisation, il est avantageux que la raideur statique du résonateur soit égale à deux fois le produit de la masse du résonateur par la pulsation du premier mode de traînée de la pale élevée à la puissance deux afin que le premier mode de vibration du résonateur soit le plus proche possible du premier mode propre de traînée de la pale.

Ainsi, on obtient la raideur statique du résonateur à partir de la relation intermédiaire suivante :

$$K_a = 2 \times m_a \times \omega_a{}^2$$

où : - «x» représente le signe de la multiplication,

- $K_a$ représente la raideur statique du résonateur,

- $m_a$ représente la masse du résonateur, et

- $\omega_a$ représente la pulsation du premier mode de traînée de la pale.

Dans ces conditions, la raideur dynamique est alors obtenue à partir de l'équation suivante ou $K'_a$ représente ladite raideur dynamique :

$$K'_a = K_a - m_a \times \omega_a^2$$

En outre, le résonateur peut comporter un palier lamifié qui entoure l'élément pesant, le palier lamifié comprenant une superposition de matériaux métalliques et en élastomères.

L'implémentation d'un palier lamifié, en contact avec le moyen de guidage, permet d'optimiser les raideurs statique et dynamique du résonateur.

Enfin, le moyen de guidage est de manière optionnelle un tube noyé dans la pale, ledit élément pesant étant agencé à l'intérieur de ce tube.

Par suite, une première extrémité du moyen de retenue élastique est fixée à un fond du tube alors qu'une deuxième extrémité de ce moyen de retenue élastique est fixée à l'élément pesant.

La présente invention a aussi pour objet le procédé apte à être mis en oeuvre par la pale selon l'invention.

Ainsi, un procédé pour réduire les mouvements en traînée d'une pale s'étendant longitudinalement d'un pied de la pale à une extrémité libre de cette pale, est remarquable en ce que l'on déplace un élément pesant solide selon une direction longitudinale de la pale afin de créer des forces de Coriolis secondaires s'opposant au mouvement en traînée de la pale.

De plus, ladite pale étant agencée sur un moyeu d'un rotor via une articulation de traînée, un rotor de giravion par exemple, on détermine avantageusement la raideur statique de l'élément pesant à l'aide de la relation finale suivante :

$$K_a = \frac{2 \times e \times m_a \times \Omega^2 \times (M_s + m_a \times r_a)}{I_\delta + m_a \times r_a^2}$$

où : - «×» représente le signe de la multiplication,

- $K_a$ représente la raideur statique du résonateur,

- $m_a$ représente la masse du résonateur,

- $\Omega$ représente la vitesse de rotation du rotor au régime nominal en radians par seconde,

- e représente l'excentricité, à savoir une première distance séparant l'articulation de traînée de la pale de l'axe de rotation du rotor,

- $r_a$ représente une deuxième distance séparant ladite articulation de traînée du centre de gravité de l'élément pesant,

- $M_s$ représente le moment statique de la pale, et

- $I_\delta$ représente l'inertie en traînée de la pale.

L'invention et ses avantages apparaîtront avec plus de détails dans le cadre de la description qui suit avec des exemples de réalisation donnés à titre illustratif en référence aux figures annexées qui représentent :

- les figures 1 et 2, des coupes schématiques d'une pale munie d'un résonateur selon une première variante d'un premier mode de réalisation,

- la figure 3, une coupe schématique du moyen de retenue du résonateur selon une deuxième variante d'un premier mode de réalisation,

- la figure 4, une coupe schématique du moyen de retenue du résonateur selon un deuxième mode de réalisation, et

- la figure 5, une coupe présentant un palier élastomérique optionnel du résonateur.

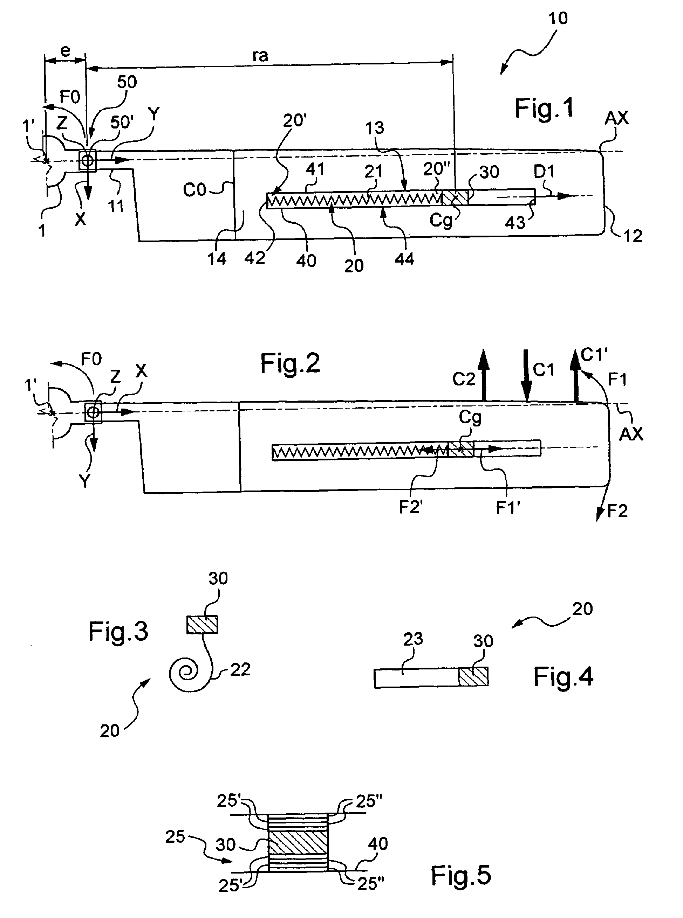

Les éléments présents dans plusieurs figures distinctes sont affectés d'une seule et même référence.
On note que trois directions X, Y et Z orthogonales les unes par rapport aux autres sont représentées sur les figures 1 et 2. Ces trois directions définissent le référentiel de la pale représentée.
La direction X est dite transversale dans la mesure où elle est disposée perpendiculairement à l'axe de variation de pas AX de la pale 10. Le terme « transversal » est relatif à une direction lui étant parallèle.
Une autre direction Y est dite longitudinale. Le terme « longitudinal » est relatif à une direction lui étant parallèle.
Enfin, une troisième direction Z est dite d'élévation et correspond aux dimensions en hauteur des structures décrites.
La figure 1 présente une coupe schématique montrant une pale 10 s'étendant de son pied 11 de pale à son extrémité libre 12. La pale 10 est fixée sur le moyeu 1 d'un rotor de giravion par une articulation de traînée 50, le pied 11 de pale étant lié à l'articulation de traînée 50 par des moyens usuels.
Lorsque le rotor du giravion est mis en rotation, la pale 10 effectue un mouvement rotatif autour de l'axe de rotation 1' du rotor.
De plus, la pale 10 effectue une rotation autour de l'axe de traînée 50'. Ce mouvement de traînée de la pale 10 peut alors engendrer des situations catastrophiques quand la fréquence propre des oscillations de chaque pale autour de leur axe de traînée est voisine de l'une des fréquences propres des oscillations de l'appareil autour de ses atterrisseurs, notamment posé sur son train d'atterrissage.
Pour éviter ce problème, la pale 10 est alors équipée d'un résonateur 13 intégré à l'intérieur de la pale 10. Par suite, il est possible de prévoir une trappe sur l'extrados de la pale 10 pour avoir accès à ce résonateur, de manière à réaliser des actions de maintenance par exemple.
Le résonateur 13 comporte un moyen de guidage 40 disposé à l'intérieur de la pale 10. Plus précisément, le moyen de guidage 40 présenté sur la figure 1 consiste en un tube 41 agencé selon une direction longitudinal D1 parallèle à l'axe de variation de pas AX de la pale 10. Le moyen de guidage comporte successivement, du pied de pale 11 vers l'extrémité libre 12 de la pale 10, une première zone extrémale 42, une zone médiane 44 et une deuxième zone extrémale 43.
Par suite, le moyen de guidage 40 est dirigé selon l'envergure de la pale 10 et non pas selon une corde CO de cette pale 10.
De plus, le résonateur 13 comprend un élément pesant 30 et solide, tel qu'un cylindre, ainsi qu'un moyen de retenue élastique 20.
La première extrémité 20' du moyen de retenue élastique 20 est fixe par rapport à pale 10, en étant solidarisée à un élément de remplissage 14 de cette pale 10 ou à la première zone extrémale 42 du moyen de guidage 40 par exemple.
A contrario, la deuxième extrémité 20" du moyen de retenue élastique est solidarisée à l'élément pesant 30.

L'élément pesant 30 coopère alors avec le moyen de guidage 40 et le moyen de retenue élastique 20.

En effet, le moyen de retenu élastique 20 et l'élément pesant 30 étant installés au sein du moyen de guidage 40, l'élément de guidage 40 coopère avec l'élément pesant 30 afin que cet élément pesant puisse se déplacer uniquement selon une direction longitudinale D1.

L'élément pesant 30 étant agencé à l'intérieur du tube 41, cet élément pesant 30 ne peut effectivement se déplacer que dans la direction longitudinale D1 suivie par le moyen de guidage 40.

En référence à la figure 1 et indépendamment du mode de réalisation choisi, lorsque la pale 10 est entraînée en rotation selon la flèche F0, l'élément pesant 30 se déplace afin d'atteindre une position d'équilibre.

Cependant, en référence à la figure 2, si la pale 10 réalise un mouvement de traînée sous l'effet des forces de traînée primaires C1' selon la flèche F1 autour de son axe de traînée 50', et donc dans le sens de rotation de la pale 10 autour de l'axe de rotation 1', l'élément pesant va se rapprocher de l'extrémité libre 12 de la pale 10 conformément à la flèche F1'.

Le changement de position de cet élément pesant 30 génère de forces de Coriolis secondaires C1 venant contrecarrer le mouvement en traînée de la pale 10 et donc limiter son amplitude.

A l'inverse, si la pale 10 réalise un mouvement de traînée selon la flèche F2 autour de son axe de traînée 50', et donc dans le sens contraire au sens de rotation de la pale 10 autour de l'axe de rotation 1', l'élément pesant va s'éloigner de l'extrémité libre 12 de la pale 10 conformément à la flèche F2' et générer des forces de Coriolis secondaires C2. Ces forces de Coriolis secondaires C2 contrecarrent le mouvement en traînée de la pale 10.

Ainsi, l'élément pesant va continuellement se déplacer, uniquement selon la direction longitudinale D1, en oscillant, autour de sa position d'équilibre.

Selon l'invention, on déplace donc un élément pesant le long d'une direction longitudinale de la pale pour générer des forces de Coriolis secondaires s'opposant au mouvement de traînée de la pale

Afin d'être optimisé, le moyen de retenue élastique 20 a une raideur statique forte, permettant de ne pas excéder la longueur de la partie courante de la pale, pour pouvoir lutter contre les forces d'inertie générées par la rotation de la pale autour de l'axe de rotation 1' du rotor.

Par conséquent, la position d'équilibre de l'élément pesant 30 se situe bien dans une zone médiane 44 du moyen de guidage 40 et non pas contre la deuxième zone extrémale 43 de ce moyen de guidage 40, à savoir la zone du moyen de guidage 40 la plus proche de l'extrémité libre 12 de la pale 10.

Cette caractéristique permet de garantir que l'élément pesant oscillera entre une première et une deuxième position extrêmes, la première position extrême se trouvant entre le pied 11 de la pale et la position d'équilibre, alors que la deuxième position extrême se trouve entre la position d'équilibre et l'extrémité libre de la pale 10.

Plus précisément, la raideur statique du résonateur peut être égale à deux fois le produit de la masse du résonateur par la pulsation du premier mode de traînée de la pale élevée à la puissance deux afin que le premier mode de vibration du résonateur soit le plus proche possible du premier mode propre de traînée de la pale.

La raideur statique du résonateur est alors établie à partir de la relation intermédiaire suivante :

$$K_a = 2 \times m_a \times \omega_a{}^2$$

où : - « $\times$ » représente le signe de la multiplication,

- $K_a$ représente la raideur statique du résonateur,

- $m_a$ représente la masse du résonateur, et

- $\omega_a$ représente la pulsation du premier mode de traînée de la pale.

En prenant en compte la masse additionnelle du résonateur pour obtenir la pulsation du premier mode de traînée de la pale, on obtient la relation finale suivante :

$$K_a = \frac{2 \times e \times m_a \times \Omega^2 \times (M_s + m_a \times r_a)}{I_\delta + m_a \times r_a^2}$$

où : - «x» représente le signe de la multiplication,

- $K_a$ représente la raideur statique du résonateur,

- $m_a$ représente la masse du résonateur,

- $\Omega$ représente la vitesse de rotation du rotor au régime nominal en radians par seconde,

- $\underline{e}$ représente l'excentricité, à savoir une première distance séparant l'articulation de traînée de la pale de l'axe de rotation du rotor,

- $r_a$ représente une deuxième distance séparant ladite articulation de traînée du centre de gravité Cg de l'élément pesant,

- $M_s$ représente le moment statique de la pale, et

- $I_\delta$ représente l'inertie en traînée de la pale.

En outre, le moyen de retenue élastique 20 a avantageusement une raideur dynamique faible, par rapport à sa raideur statique, pour maximiser les oscillations de l'élément pesant 30 autour de sa position d'équilibre selon la direction longitudinale D1.

Selon le premier mode de réalisation de l'invention, le moyen de retenue élastique est un ressort.

En référence aux figures 1 et 2, selon une première variante de ce premier mode de réalisation, le moyen de retenue élastique 20 est un ressort linéaire 21.

Par contre, selon une deuxième variante de ce premier mode de réalisation représentée sur la figure 3, le moyen de retenu élastique 20 est un ressort de torsion 22.

En référence à la figure 4, le moyen de retenue 20 comporte un matériau 23 à caractéristiques non linéaires faisant partie du groupe des élastomères.

Enfin, en référence à la figure 5, il est envisageable d'équiper le résonateur d'un palier lamifié 25 pour obtenir les raideurs statique et dynamique souhaitées. Un tel pallier lamifié est muni d'une succession de couches métalliques 25' et de couches en élastomères 25".

Ce palier lamifié 25 est alors solidarisé à la périphérie extérieure de l'élément pesant 30 afin de l'entourer. De plus, le palier lamifié 25 est en contact avec le moyen de guidage 40.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention tel que défini pas les revendications.

**Revendications**

1.  Pale (10) s'étendant longitudinalement d'un pied (11) de la pale (10) à une extrémité libre (12) de cette pale (10), la pale (10) étant munie d'un résonateur (13) intégré pour réduire les mouvements en traînée (F1, F2) de ladite pale (10), ledit résonateur (13) étant pourvu d'un élément pesant (30) solide et mobile ainsi que d'un moyen de retenue élastique (20) solidaire dudit élément pesant (30) et de ladite pale (10),
    **caractérisée en ce que** ledit résonateur (13) comporte un moyen de guidage (40) dans lequel ledit élément pesant (30) est apte à osciller (F1', F2') longitudinalement, ledit moyen de guidage (40) étant agencé selon une direction longitudinale (D1) de la pale.

2.  Pale selon la revendication 1,
    **caractérisée en ce que** ledit moyen de retenue élastique (20) a une raideur statique élevée et une raideur dynamique faible.

3.  Pale selon l'une quelconque des revendications précédentes,
    **caractérisée en ce que** ledit moyen de retenue élastique (20) est un ressort (21, 22).

4.  Pale selon la revendication 3,
    **caractérisée en ce que** ledit ressort est un ressort de torsion (22).

5.  Pale selon l'une quelconque des revendications 1 à 3,

**caractérisée en ce que** ledit moyen de retenue élastique comporte un matériau (23) faisant parti du groupe des élastomères.

6. Pale selon l'une quelconque des revendications 1 à 4, **caractérisée en ce que** la raideur statique du résonateur ($K_a$) est égale à deux fois le produit de la masse ($m_a$) du résonateur par la pulsation ($\omega_a$) du premier mode de traînée de la pale élevée à la puissance deux.

7. Pale selon l'une quelconque des revendications précédentes, **caractérisée en ce que** ledit résonateur (13) comporte un palier lamifié (25) qui entoure ledit élément pesant (30) tout en étant contact avec ledit moyen de guidage (40), ledit palier lamifié (25) comprenant une superposition de couches de matériaux métalliques (25') et en élastomères (25").

8. Pale selon l'une quelconque des revendications précédentes, **caractérisée en ce que** ledit moyen de guidage (40) est un tube (41) noyé dans ladite pale (10), ledit élément pesant (30) étant agencé à l'intérieur dudit tube (41).

9. Pale selon l'une quelconque des revendications précédentes, **caractérisée en ce que** ladite pale (10) est une pale de giravion.

10. Procédé pour réduire les mouvements en traînée (F1, F2) d'une pale (10) s'étendant longitudinalement d'un pied (11) de la pale (10) à une extrémité libre (12) de cette pale (10), **caractérisé en ce que**, ladite pale (10) étant une pale selon l'une quelconque des revendications précédentes, on fait osciller un élément pesant (30) solide de la pale dans un moyen de guidage autour d'une position d'équilibre selon une direction longitudinale (D1) de la pale afin de créer des forces de Coriolis secondaires (C1, C2) s'opposant au mouvement en traînée de la pale.

11. Procédé selon la revendication 10, **caractérisé en ce que**, ladite pale (10) étant agencée sur un moyeu (1) de rotor via une articulation de traînée, on détermine avantageusement la raideur statique de l'élément pesant à l'aide de la relation finale suivante :

$$K_a = \frac{2 \times e \times m_a \times \Omega^2 \times (M_s + m_a \times r_a)}{I_\delta + m_a \times r_a^2}$$

où : - «$\times$» représente le signe de la multiplication,

- $K_a$ représente la raideur statique du résonateur (13),
- $m_a$ représente la masse du résonateur (13),
- $\Omega$ représente la vitesse de rotation du rotor (1) au régime nominal en radians par seconde,
- e représente l'excentricité, à savoir une première distance séparant l'articulation de traînée (50) de la pale (10) de l'axe de rotation (1') du rotor (1),
- $r_a$ représente une deuxième distance séparant ladite articulation de traînée (50) du centre de gravité (Cg) de l'élément pesant (30),
- $M_s$ représente le moment statique de la pale (10), et
- $I_\delta$ représente l'inertie en traînée de la pale (10).

**Claims**

1. Blade (10) extending longitudinally from a root (11) of the blade (10) to a free end (12) of this blade (10), the blade (10) being provided with an incorporated resonator (13) to reduce the drag movements (F1, F2) of said blade (10), said resonator (13) being provided with a solid and movable heavy element (30) and with a resilient retaining means (20) secured to said heavy element (30) and to said blade (10), **characterised in that** said resonator (13) comprises a guide means (40) in which said heavy element (30) is capable of oscillating (F1', F2') longitudinally, said guide means (40) being arranged in a longitudinal direction (D1) of the blade.

**2.** Blade according to Claim 1,
**characterised in that** said resilient retaining means (20) has high static stiffness and low dynamic stiffness.

**3.** Blade according to either one of the preceding claims,
**characterised in that** said resilient retaining means (20) is a spring (21, 22).

**4.** Blade according to Claim 3,
**characterised in that** said spring is a torsion spring (22).

**5.** Blade according to any one of Claims 1 to 3,
**characterised in that** said resilient retaining means comprises a material (23) belonging to the elastomer group.

**6.** Blade according to any one of Claims 1 to 4,
**characterised in that** the static stiffness ($K_a$) of the resonator is equal to twice the product of the mass ($m_a$) of the resonator and the angular frequency ($\omega_a$) of the first drag mode of the blade raised to the power two.

**7.** Blade according to any one of the preceding claims,
**characterised in that** said resonator (13) comprises a laminated bearing (25) surrounding said heavy element (30) and coming into contact with said guide means (40), said laminated bearing (25) comprising superposed layers of metal material (25') and of elastomer material (25").

**8.** Blade according to any one of the preceding claims,
**characterised in that** said guide means (40) is a tube (41) embedded in said blade (10), said heavy element (30) being arranged inside said tube (41).

**9.** Blade according to any one of the preceding claims,
**characterised in that** said blade (10) is a rotorcraft blade.

**10.** Method of reducing the drag movements (F1, F2) of a blade (10) extending longitudinally from a root (11) of the blade (10) to a free end (12) of this blade (10),
**characterised in that** said blade (10) is a blade according to any one of the preceding claims, and a solid heavy element (30) of the blade is caused to oscillate in guide means about an equilibrium position in a longitudinal direction (D1) of the blade in order to create secondary Coriolis forces (C1, C2) opposing the drag movement of the blade.

**11.** Method according to Claim 10,
**characterised in that** said blade (10) is arranged on a rotor hub (1) via a drag hinge, and the static stiffness of the heavy element is advantageously determined using the following final relationship:

$$K_a = \frac{2 \times e \times m_a \times \Omega^2 \times (M_s + m_a + r_a)}{I_\delta + m_a + r_a^2}$$

where:

- "$\times$" represents the multiplication sign,
- $K_a$ represents the static stiffness of the resonator (13),
- $m_a$ represents the mass of the resonator (13),
- $\Omega$ represents the speed of rotation of the rotor (1) at nominal speed in radians per second,
- e represents the eccentricity, i.e. a first distance between the drag hinge (50) of the blade (10) and the axis of rotation (1') of the rotor (1),
- $r_a$ represents a second distance between said drag hinge (50) and the centre of gravity (Cg) of the heavy element (30),
- $M_s$ represents the static moment of the blade (10), and
- $I_\delta$ represents the drag inertia of the blade (10).

**Patentansprüche**

1. Blatt (10), welches sich ausgehend von einem Fuß (11) des Blattes (10) längs bis zu seinem freien Ende (12) erstreckt, wobei das Blatt (10) mit einem Resonator (13) versehen ist, der integriert ist, um Bewegungen (F1, F2) des Blattes (10) im Strömungswiderstand zu reduzieren, wobei der Resonator (13) mit einem schweren, festen und beweglichen Element (30) sowie einem elastischen Haltemittel (20), welches mit dem schweren Element (30) und dem Blatt (10) verbunden ist, versehen ist, **dadurch gekennzeichnet, dass** der Resonator (13) ein Führungsmittel (40) aufweist, indem das schwere Element (30) in Längsrichtung (F1', F2') oszillieren kann, wobei das Führungsmittel (40) in der Längsrichtung (D1) des Blattes angeordnet ist.

2. Blatt nach Anspruch 1,
   **dadurch gekennzeichnet, dass** die elastischen Rückhaltemittel (20) eine hohe statische Steifigkeit und eine geringe dynamische Steifigkeit aufweisen.

3. Blatt nach einem der vorstehenden Ansprüche,
   **dadurch gekennzeichnet, dass** das elastische Rückhaltemittel (20) eine Feder (21, 22) ist.

4. Blatt nach Anspruch 3,
   **dadurch gekennzeichnet, dass** die Feder eine Drehfeder (22) ist.

5. Blatt nach einem der Ansprüche 1 bis 3,
   **dadurch gekennzeichnet, dass** die elastischen Rückhaltemittel ein Material (23) aufweisen, welches der Gruppe der Elastomere angehört.

6. Blatt nach einem der Ansprüche 1 bis 4,
   **dadurch gekennzeichnet, dass** die statische Steifigkeit der Feder (Ko) gleich dem Doppelten des Produktes aus der Masse (mo) des Resonators multipliziert mit der Frequenz ($\omega_0$) der ersten Mode des Strömungswiderstands des Blattes zum Quadrat ist.

7. Blatt nach einem der vorstehenden Ansprüche,
   **dadurch gekennzeichnet, dass** der Resonator (13) ein laminiertes Auflager (25) aufweist, welches das schwere Element (30) umgibt und das mit den Führungsmitteln (40) in Kontakt ist, wobei das laminierte Auflager (25) eine Schichtung aus metallischen Materialschichten (25') und Elastomeren (25'') aufweist.

8. Blatt nach einem der vorstehenden Ansprüche,
   **dadurch gekennzeichnet, dass** das Führungsmittel (40) ein in das Blatt (10) eingelassenes Rohr (41) und das schwere Element (30) im Inneren des Rohrs (41) angeordnet ist.

9. Blatt nach einem der vorstehenden Ansprüche,
   **dadurch gekennzeichnet, dass** es ein Blatt eines Drehflügelflugzeugs ist.

10. Verfahren zur Reduzierung von Bewegungen im Strömungswiderstand (F1, F2) eines Blattes (10), welches sich längs ausgehend von einem Fuß (11) des Blattes (10) zu einem freien Ende (12) des Blattes (10) erstreckt, **dadurch gekennzeichnet, dass** das Blatt (10) ein Blatt gemäß einem beliebigen der vorstehenden Ansprüche ist und wobei man ein schweres, solides Element (30) des Blattes in einem Führungsmittel um eine Gleichgewichtsposition in Längsrichtung (D1) des Blattes oszillieren lässt, um eine sekundäre Corioliskraft (C1, C2) zu erzeugen, die sich einer Bewegung des Blattes (10) im Strömungswiderstand widersetzt.

11. Verfahren nach Anspruch 10,
    **dadurch gekennzeichnet, dass** das Blatt (10) auf einer Nabe (1) eines Rotors über eine gelenkige Lagerung angebracht ist, wobei man vorteilhafter Weise die statische Steifigkeit des schweren Elements mit Hilfe der folgenden finalen Gleichung bestimmt:

$$K_0 = \frac{2 \times e \times m_0 \times \Omega^2 \times (M_s + m_0 \times r_0)}{I_\delta + m_0 \times r_0^2},$$

wobei: x das Multiplikationszeichen bedeutet,
Ko die statische Steifigkeit des Resonators (13) bedeutet,
mo die Masse des Resonators (13) bedeutet,
$\Omega$ die Drehgeschwindigkeit des Rotors (1) im Normalbetrieb in Radian pro Sekunde bedeutet,
e die Exzentrizität, das heißt, ein erster Abstand, der das Gelenk (50) des Blattes (10) von der Drehachse (1') des Rotors (1) trennt,
ro einen zweiten Abstand bedeutet, der das Drehgelenk (50) von dem Schwerpunkt (Cg) des schweren Elements (30) trennt,
$M_s$ das statische Moment des Blattes (10), und
$I_\delta$ die Trägheit des Blattes (10) im Strömungswiderstand bedeutet.

Fig.1

Fig.2

Fig.3

Fig.4

Fig.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2497073
- FR 791701
- DE 10202995
- EP 0792414 A
- EP 1101034 A
- FR 2630703
- US 4915585 A